# EUROPÄISCHE PATENTANMELDUNG

(11) **EP 3 591 200 A1**
(43) Veröffentlichungstag der Anmeldung: **08.01.2020**
(21) Anmeldenummer: 19187028.6
(22) Anmeldetag: 23.02.2007
(51) Int. Cl.: F02G 5/02, F01N 5/02, F02C 6/12, F01N 3/04, F01D 25/10, F02B 39/00

(54) **FAHRZEUG ODER STATIONÄRE KRAFTANLAGE MIT EINER AUFGELADENEN BRENNKRAFTMASCHINE ALS ANTRIEBSQUELLE**

(30) Priorität: 15.03.2006 DE 102006011797
(62) Teilanmeldung aus: 07003700.7
(71) Anmelder: MAN Truck & Bus SE, 80995 München (DE)
(72) Erfinder: Stiermann, Erwin, 86356 Neusäss (DE)
(74) Vertreter: Liebl, Thomas

(57) **Zusammenfassung**

Die Erfindung betrifft Fahrzeug oder stationäre Kraftanlage, mit einer mittels Abgasturbolader (2) aufgeladenen Brennkraftmaschine (1) als Antriebsquelle und mit Komponenten, die von einem in einem geschlossenen Kreislauf (3, 3') aufgenommenen Medium her mit Wärme versorgbar sind. Erfindungsgemäß ist die Turbine (4) des Abgasturboladers (2) als Heizquelle herangezogen und/oder ausgebildet und ist hierzu außen am Turbinengehäuse (10) ein Wärmetauscher (12) angeordnet, der in den Medium-Kreislauf (3, 3') eingebunden oder einschaltbar ist und in dessen Innenraum (13) das direkt oder kanalisiert hindurchgeleitete Medium unter Ausnutzung wenigstens der thermischen Abstrahlungsenergie des heißen Turbinengehäuses (10) aufheizbar ist, wobei im Medium-Kreislauf (3, 3') eine Pumpe (34) für die Umwälzung des Mediums sorgt, und dass der Wärmetauscher (12) über eine Zuleitung (22) und Abführleitung (23) bedarfsweise durch schaltbare Umschaltventile (35, 36; 38) in den Medium-Kreislauf (3) ein- und wieder aussteuerbar ist, wobei das erste (35) und zweite Umschaltventil (36) über einen Leitungsabschnitt (37) miteinander verbunden sind, der im Fall der Nichteinbindung des Wärmetauschers (12) diesen dann im Medium-Kreislauf (3, 3') als Bypass überbrückt, und wobei der Wärmetauscher (12) in einen autarken, von der Brennkraftmaschine (1) und deren Kühlkreislauf unabhängigen Medium-Kreislauf (3') einschaltbar bzw. eingebunden ist, in dem eine weitere Pumpe (48) für die Umwälzung des Mediums sorgt und zwei durch einen Leitungsabschnitt (51) verbundene Umschaltventile (49, 50) vorgesehen sind, mit denen je nach Einstellung die Einschaltung des Wärmetauschers (12) in den Medium-Kreislauf (3') oder eine Überbrückung des Wärmetauschers (12) über den dann als Bypass fungierenden Leitungsabschnitt (51) steuerbar ist.

## Beschreibung

Die Erfindung bezieht sich auf ein Fahrzeug oder eine stationäre Kraftanlage mit Merkmalen gemäß dem Oberbegriff des Anspruchs 1.

In einem Fahrzeug oder einer stationären Kraftanlage gibt es an der die Antriebsquelle bildenden Brennkraftmaschine und in deren Umfeld eine Reihe von Komponenten und Einrichtungen wie Kurbelgehäuse, Zylinderköpfe, Kühler, Behälter, die von einem in einem geschlossenen Kreislauf aufgenommenen Medium durchströmt werden. Im Falle eines Kühlkreislaufes ist es bekannt, zur Verbesserung des Kaltstartverhaltens der Brennkraftmaschine und einer schnelleren Verfügbarkeit von Heizungswärme elektrische Zusatzeinrichtungen vorzusehen, mit denen das Kühlmittel aufheizbar ist. Diese elektrischen Zusatzheizungen sind meist relativ teuer und belasten aufgrund ihres hohen Energiebedarfs die energieliefernde Batterie. Solche elektrische Zusatzheizungen sind z. B. auch für solche Fälle vorgesehen, wenn der Kühlwasserkreislauf der Brennkraftmaschine auch zur Auftauung einer in einem Behälter bevorrateten, bei Temperaturen unter ca. -12°C eingefrorenen Harnstoffwasserlösung (dient als Ammoniaklieferant für NOₓ-Reduktion in SCR-Katalysatoren) herangezogen wird. Da die Batterie insbesondere bei über einen längeren Zeitraum oder in bestimmten Weltregionen ohnehin immer vorherrschenden tiefen Minustemperaturen stark belastet ist, sind elektrische Zusatzheizungen für eine Kühlwasseraufheizung nach Möglichkeit nur so lange wie unbedingt erforderlich in Betrieb zu nehmen. Für den Rest der Brennkraftmaschinen- oder Fahrzeugbetriebszeit werden sie nicht benötigt.

Es ist daher Aufgabe der Erfindung, für ein Fahrzeug oder eine stationäre Anlage der gattungsgemäßen Art Mittel bereitzustellen, die es ermöglichen, dass auf elektrische Zusatzheizungen zur Erwärmung eines in einem geschlossenen Kreislauf aufgenommenen Mediums verzichtet werden kann.

Diese Aufgabe ist erfindungsgemäß entsprechend dem Kennzeichen des Anspruchs 1 dadurch gelöst, dass die Turbine des Abgasturboladers als Heizquelle herangezogen und/oder ausgebildet ist und hierzu außen am Turbinengehäuse ein Wärmetauscher angeordnet ist, der in den Medium-Kreislauf eingebunden oder einschaltbar ist und in dessen Innenraum das direkt oder kanalisiert hindurchgeleitete Medium unter Ausnutzung wenigstens der thermischen Abstrahlungsenergie des heißen Turbinengehäuses aufheizbar ist.

Vorteilhafte Ausgestaltungen und Weiterbildungen dieser erfindungsgemäßen Lösung sind in den Unteransprüchen angegeben.

Die Erfindung geht von der Tatsache aus, dass es sich bei der Turbine des Abgasturboladers einer Brennkraftmaschine nach deren Kaltstart um das am schnellsten warm bzw. heiß werdende und Wärme abstrahlende Aggregat handelt. Bis dato ist die Abwärme der Turbine, insbesondere wenn diese im Volllastbetrieb nahezu rotglühend ist, eher als hinderlich betrachtet worden. Im Umfeld der heißen Turbine angeordnete Fahrzeugteile wurden durch Isolationswände oder Hitzeschilde gegen zu starke Hitzewirkung abgeschottet. Außerdem wurde die Turbine intensiv gekühlt. Die Erfindung dagegen macht sich die rasche Erwärmung der Turbine zunutze, indem sie nun ganz gezielt als Heizquelle für ein zu beheizendes Medium herangezogen wird. Dies geschieht über einen Wärmetauscher, der außen am Turbinengehäuse angeordnet ist. Durch dessen Innenraum kann das aufzuheizende Medium entweder direkt oder kanalisiert hindurchgeleitet werden. Bei der direkten Hindurchleitung nimmt das Medium vom heißen Turbinengehäuse Wärme auf, je nach Verweildauer im Wärmetauscherinnenraum oder Durchströmgeschwindigkeit mehr oder weniger. Wenn das aufzuheizende Medium kanalisiert durch den Innenraum des Wärmetauschers hindurchgeleitet wird, besteht die Möglichkeit, in den Wärmetauscherinnenraum zusätzlich Abgas der Brennkraftmaschine einzuspeisen bzw. durch ihn hindurchzuleiten, sodass auch der Wärmeinhalt des Abgases zusätzlich zur Abstrahlungsenergie des Turbinengehäuses für die Aufheizung des Mediums heranziehbar ist.

Der Wärmetauscher kann auf verschiedene Art ausgebildet und/oder am Turbinengehäuse angeordnet sein. Über einige dieser Ausführungsformen und Ausgestaltungen geben die Zeichnung und zugehörige Figurenbeschreibung Auskunft.

Die erfindungsgemäße Art der Erwärmung bzw. Erhitzung des Mediums lässt wegen der möglichen hohen Energieeinbringung - verbunden sogar mit einem Wechsel des Aggregatszustands von flüssig in dampfförmig - verschiedenste Nutzungen dieses solchermaßen erhitzten Mediums zu. Ein solcher Anwendungsfall ist z. B. die rasche Aufwärmung des flüssigen Kühlmittels (Wasser oder mit Frostschutzmittel gemischtes Kühlwasser) einer Brennkraftmaschine nach deren Kaltstart. In anderen Anwendungsfällen wird das aufgeheizte Medium über einen in den Medium-Kreislauf eingebundenen oder eingeschalteten Wärmeabnehmer wie Behälter geleitet, so dass die darin bevorratete oder befindliche Flüssigkeit erwärmbar oder aufheizbar oder am Einfrieren hinderbar oder nach einem Kaltstart der Brennkraftmaschine schnell auftaubar ist. Bei diesem Wärmeabnehmer kann es sich beispielsweise um einen Vorratsbehälter für eine Harnstoffwasserlösung oder eine Windschutzscheiben-, Scheinwerfer- und/oder Außenspiegelreinigungsflüssigkeit oder einen kühlwasserführenden Kühler oder den Kühlwasserausgleichsbehälter handeln. Aber auch elektrische Speicher-Batterien oder Fahrzeugheizungen sind mit dem erfindungsgemäß aufgeheizten Medium beheizbar. Das erfindungsgemäß aufgeheizte Medium kann z. B. aber auch in einem Reiseomnibus oder Wohnmobil dem Warmwasserbehälter der Bordküche oder dem Spülwasservorratsbehälter der Bordtoilette zwecks Aufheizung bzw. Warmhaltung oder als Einfrierschutz zugeführt werden. Ferner kann das Medium, wenn es sich bei diesem um eine niedrig-siedende Flüssigkeit handelt, die bei Durchströmen des turbinenseitigen Wärmetauschers vom flüssigen in seinen dampfförmigen Aggregatzustand überführt und in diesem dampfförmigen Zustand einer Dampfturbine zugeführt werden, von der es leistungsabgebend in mechanische Antriebsenergie umsetzbar ist.

Weitere Anwendungsfälle ergeben sich aus den Unteransprüchen und der Figurenbeschreibung.

Nachfolgend ist die Erfindung anhand mehrerer in der Zeichnung dargestellter Ausführungs- und Anwendungsbeispiele noch näher erläutert. In der Zeichnung zeigen:
- Fig. 1: einen Längsschnitt durch einen Abgasturbolader mit einer Ausführungsform eines erfindungsgemäßen Wärmetauschers,
- Fig. 2: einen Längsschnitt durch einen anderen Abgasturbolader mit einem weiteren Ausführungsbeispiel eines erfindungsgemäßen Wärmetauschers,
- Fig. 3: einen Querschnitt (schematisiert) durch die Turbine des Abgasturboladers gemäß Fig. 2 im Bereich des erfindungsgemäßen Wärmetauschers,
- Fig. 4 und 5: schematisiert je eine Seitenansicht eines Abgasturboladers mit je einer weiteren Ausführungsform des erfindungsgemäßen Wärmetauschers,
- Fig. 6 bis 10: jeweils ein Beispiel einer Anwendung eines Medium-Kreislaufs, in den der erfindungsgemäße Wärmetauscher eingebunden bzw. einschaltbar ist.

In den Figuren ist - soweit dargestellt - mit 1 eine Brennkraftmaschine, insbesondere Dieselmotor, bezeichnet, die mittels eines Abgasturboladers 2 aufgeladen ist. Diese aufgeladene Brennkraftmaschine 1 bildet in einem Fahrzeug oder einer stationären Kraftanlage die Antriebsquelle. Bei dem Fahrzeug kann es sich um einen Personenkraftwagen, ein Nutzfahrzeug jeglicher Art, ein Schienenfahrzeug, Wasser- oder Luftfahrzeug handeln. Bei der stationären Kraftanlage kann es sich z. B. um ein Notstromaggregat (Diesel-Generator-Set), ein Blockheizkraftwerk (Diesel-Generator-Dampferzeugungs-Set), ein Hebewerk oder jede andere industrielle Anlage handeln, in der eine Brennkraftmaschine antriebswirksam eingesetzt ist. Das Fahrzeug oder die stationäre Kraftanlage weisen Komponenten auf, die einer Erwärmung, Beheizung oder Warmhaltung bedürfen und von einem in einem geschlossenen Kreislauf 3, 3' aufgenommenen Medium her mit Wärme versorgbar sind. Der Abgasturbolader 2 besteht aus einer Abgasturbine 4 und einem Ladeluftverdichter 5. Die Abgasturbine 4 steht über einen Abgaskrümmer 6 mit den Abgasauslässen der Brennkraftmaschine in Kommunikation und erhält Abgas in Richtung des Pfeils A zugeführt. Die Verbindung zwischen Abgasturbine 4 und Abgaskrümmer 6 ist über Flansche 7, 8 hergestellt, wobei der Flansch 7 am Eingang 9 des Turbinengehäuses 10 und der Flansch 8 am zugewandten Ende des Abgaskrümmers 6 angeordnet und die Verbindung der beiden Flansche 7, 8 über Schraubverbindungen 11 hergestellt ist. Der Ladeluftverdichter 5 versorgt über eine Ladeluftsammelleitung die Einlässe der Brennkraftmaschine 1.

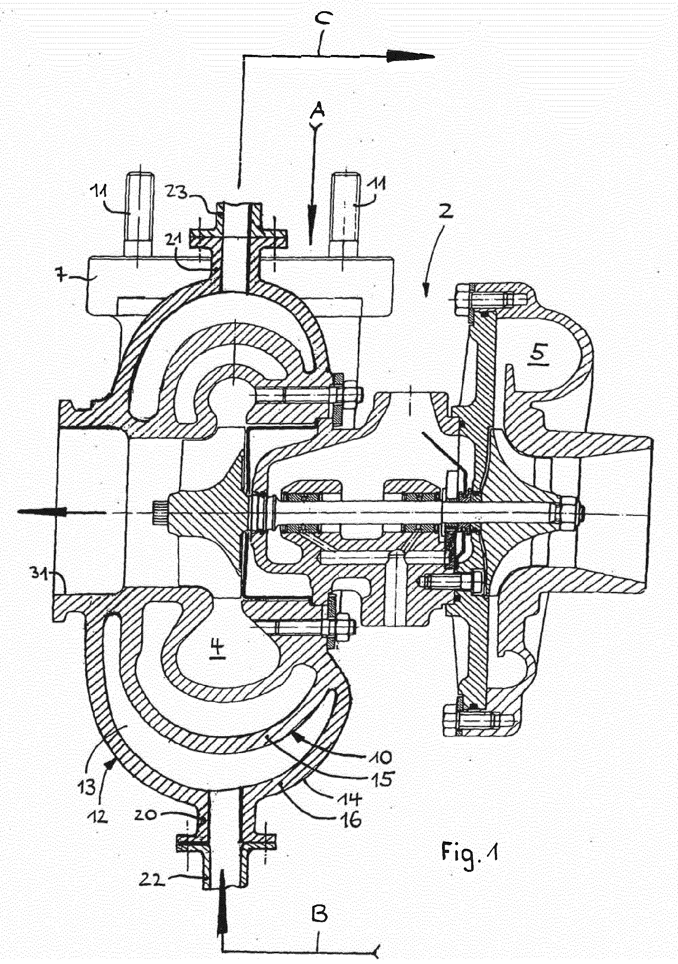

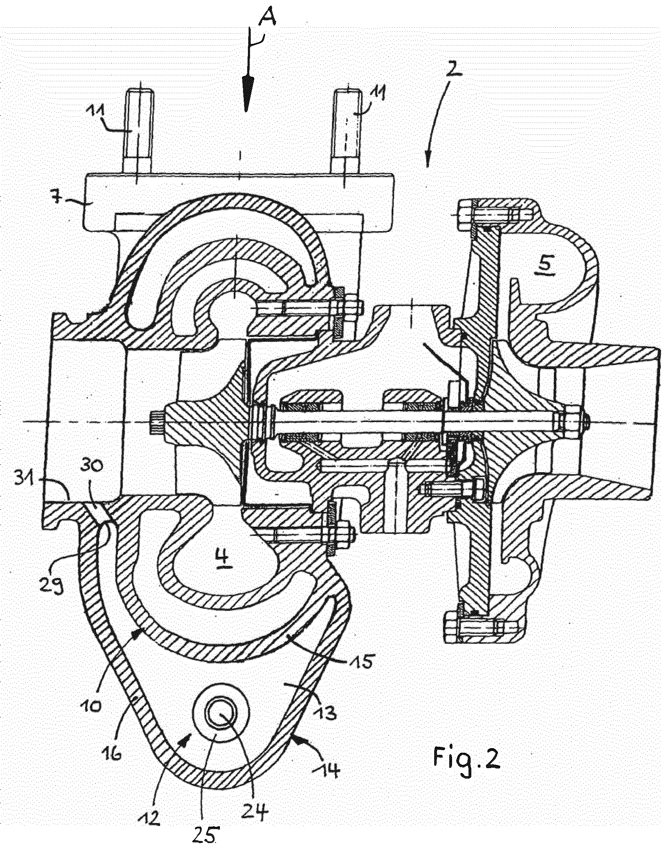

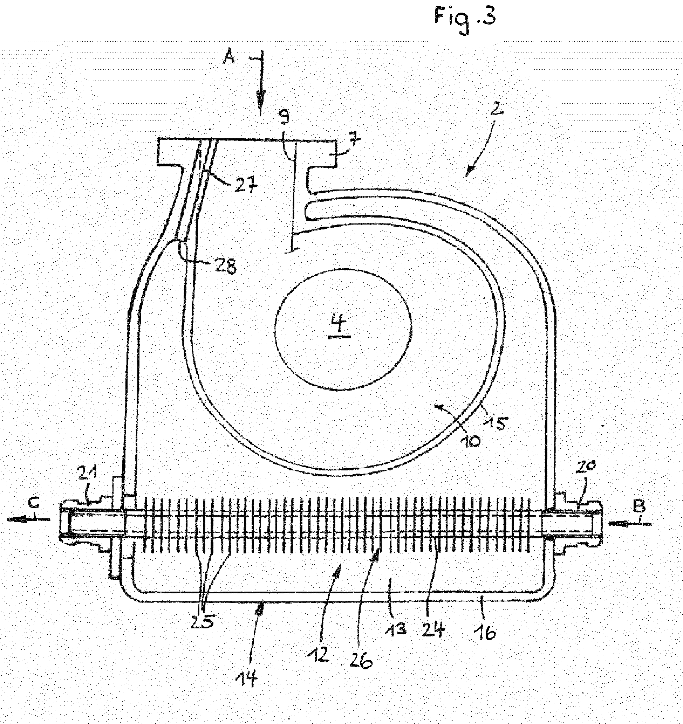

Erfindungsgemäß ist die Turbine 4 des Abgasturboladers 2 als Heizquelle für das Medium herangezogen und/oder ausgebildet. Hierzu ist außen am Turbinengehäuse 10 ein Wärmetauscher 12 angeordnet, der in den Medium-Kreislauf 3 eingebunden oder einschaltbar ist und in dessen Innenraum 13 das direkt oder kanalisiert hindurchgeleitete Medium unter Ausnutzung wenigstens der thermischen Abstrahlungsenergie des heißen Turbinengehäuses 10 aufheizbar ist. Beispiele für die direkte Hindurchleitung des Mediums durch den Innenraum 13 des Wärmetauschers 12 sind in den Figuren 1, 4 und 5 gezeigt. Die Figuren 2 und 3 dagegen zeigen ein Beispiel für eine kanalisierte bzw. verrohrte Hindurchführung des Mediums durch den Innenraum 13 des Wärmetauschers 12.

Insbesondere dann, wenn das aufzuheizende Medium kanalisiert oder verrohrt durch den Innenraum 13 des Wärmetauschers 12 hindurchgeleitet wird, bietet es sich an, zusätzlich Abgas in den Wärmetauscher-Innenraum 13 einzuspeisen bzw. durch diesen hindurchzuleiten und dabei den Wärmeinhalt des Abgases zusätzlich zur Aufheizung des Mediums mit heranzuziehen.

Der Wärmetauscher 12 kann auf verschiedene Art und Weise außen am Turbinengehäuse 10 realisiert sein.

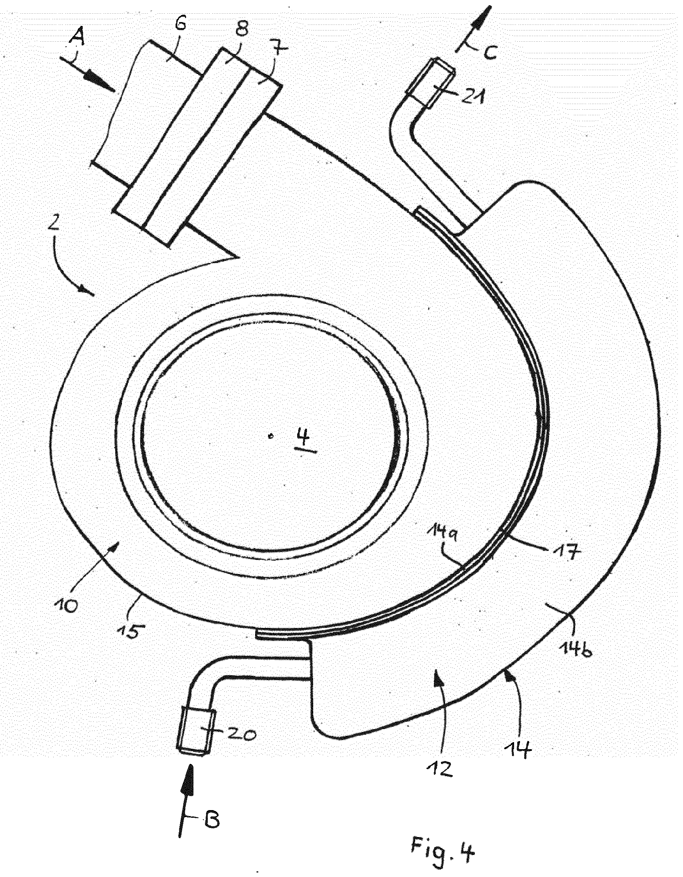

Beispielsweise kann der Wärmetauscher 12 als integraler Bestandteil der Abgasturbine 4 realisiert und hierzu das Gehäuse 14 des Wärmetauschers 12 durch die Turbinengehäuse-Außenwand 15 und einer weitere, an dieser mit angegossene oder befestigte Gehäuseaußenwand 16 gebildet sein (siehe Fig. 1, 2 und 3). Bei einer gebauten Ausführungsform des Wärmetauschers 12 kann eine Außenwand 16 des Wärmetauscher-Gehäuses 14 in Schalenform aus hochwarmfesten Stahlblech durch Ausstanzen und Prägen hergestellt und dann außen an der Turbinengehäuse-Außenwand 15 z. B. durch Schweißen oder durch Spannbänder befestigt werden. Alternativ hierzu ist es aber auch möglich, den Wärmetauscher 12 mit einem Gehäuse 14 zu realisieren (siehe Fig. 4), das aus mehreren aus hochwarmfesten Stahlblech vorgefertigten Teilen 14a, 14b zusammengesetzt und dann mit seinem dem Turbinengehäuse 10 zugewandten Außenwand-Bereich 17 am vorgesehenen Außenbereich der Turbinengehäuse-Außenwand 15 - formmäßig an diese angepasst und für optimalen Wärmeübergang innig angeschmiegt - befestigt wird, z. B. durch Schweißen oder mittels Spannbändern oder dergleichen.

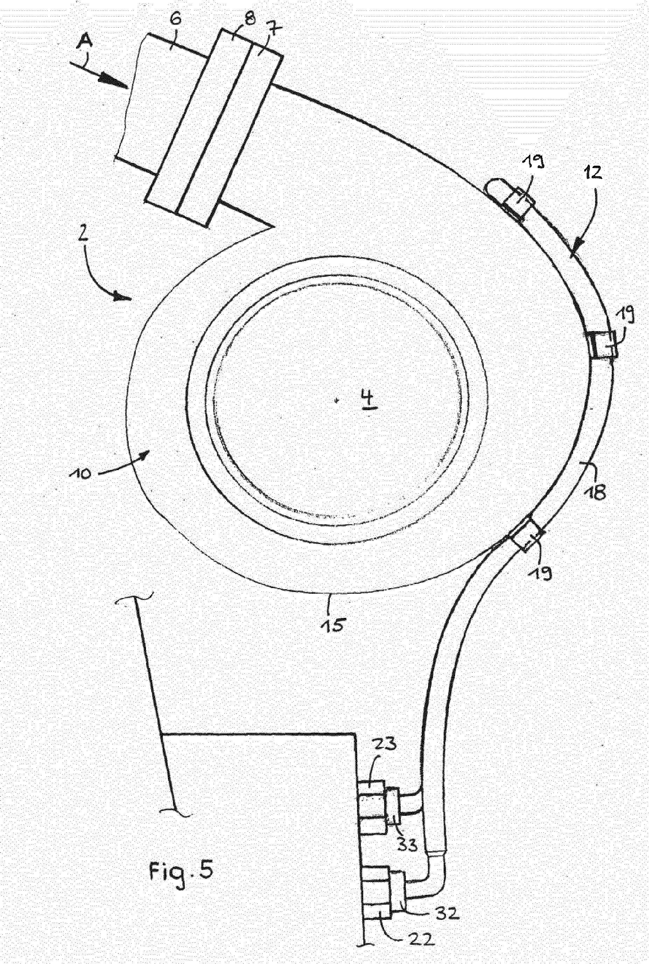

Alternativ hierzu kann der Wärmetauscher 12 aber auch durch ein Wärmetauscherrohr 18 gebildet sein, das - wie aus Fig. 5 ersichtlich - gebogen oder mäandernd am Turbinengehäuse 10 der Abgasturbine 4, dort am vorgesehenen Außenbereich - an diesen formschlüssig angepasst und für optimalen Wärmeübergang innig angeschmiegt - befestigt ist, z. B. durch mehrere Klammern bzw. Halter 19.

Bei den Ausführungsbeispielen gemäß Fig. 1 bis 4 sind am Gehäuse 14 des Wärmetauschers 12 ein erster Anschluss 20 und zweiter Anschluss 21 vorgesehen, wobei am ersten Anschluss 20 eine Zuleitung 22 für das aufzuheizende Medium (Pfeil B) und am zweiten, vom ersten (20) räumlich beabstandeten Anschluss 21 eine Abführleitung 23 für das aufgeheizte Medium (Pfeil C) angeschlossen ist. Über die Zuleitung 22 sowie die Abführleitung 23 ist der Wärmetauscher 12 in den Medium-Kreislaufs 3 eingebunden bzw. einschaltbar, wie weiter hinten noch näher erläutert.

Im Fall der Ausführungsbeispiele gemäß Fig. 1 und 4 ist das aufzuheizende Medium über die Zuleitung 22 und den ersten Anschluss direkt in den Innenraum 13 des Wärmetauscher-Gehäuses 14 einleitbar, wo es in Kontakt mit der heißen Außenwand 15 des Turbinengehäuses 10 (Fig. 1) oder dem von letzterer her aufgeheizten Gehäuse-Außenwandbereich 17 (Fig. 4) kommt und hierdurch aufheizbar ist sowie nach einer gewissen Verweilzeit aus dem Wärmetauscher-Gehäuse 14 über den zweiten Anschluss 21 wieder ausleitbar und über die Abführleitung 23 dem Mediumkreislauf 3 zur dortigen weiteren Verwendung zuführbar ist.

Im Falle des Beispiels gemäß Fig. 2, 3 erstreckt sich zwischen erstem Anschluss 20 und zweitem Anschluss 21 des Wärmetauschers 12 ein Wärmetauscherrohr 24, mit dem das aufzuheizende Medium kanalisiert bzw. verrohrt durch den Innenraum 13 des Wärmetauscher-Gehäuses 14 hindurchleitbar ist. Dabei kann sich das Wärmetauscherrohr 24 gerade oder in mäandernder Form zwischen den beiden Anschlüssen 20, 21 erstrecken. Außerdem kann das Wärmetauscherrohr 24 außen mit wärmeübertragenden Rippen 25 ausgestattet sein. Alternativ zu einem Einzelrohr 24 kann sich zwischen erstem Anschluss 20 und zweitem Anschluss 21 des Wärmetauschers 12 aber auch ein zwischen zwei endseitig angeordneten Sammelräumen gefasstes Wärmetauscherrohrbündel erstrecken, das aus einer Anzahl von geraden, parallel verlaufenden Wärmetauscherrohren besteht, die gegebenenfalls außen noch jeweils verrippt sind.

Das Wärmetauscherrohr 24 oder das besagte Wärmetauscherrohrbündel kann Bestandteil einer Wärmetauscherkartusche 26 sein, die - wie z. B. aus Fig. 3 ersichtlich - auch die beiden Anschlüsse 20, 21 enthält und vorgefertigt in das Gehäuse 14 des Wärmetauschers 12 einbaubar ist und sich in Einbaulage dann zwischen Zuleitung 22 und Abführleitung 23 erstreckt.

Das Wärmetauscherrohr 24 bzw. das Wärmetauscherrohrbündel nehmen innerhalb des geschlossenen Wärmetauschergehäuses 14 die von der Außenwand 15 der Turbine 10 abgestrahlte Wärmeenergie auf. Wie schon weiter vorne erwähnt, kann die Heizleistung in Fällen der kanalisierten bzw. verrohrten Hindurchleitung des Mediums dadurch erhöht werden, dass Abgas in den Innenraum 13 des Wärmetauschers 12 eingespeist wird. Dieses Abgas ist aus dem Abgastrakt 6 vor dem oder im Eingang 9 der Abgasturbine 4 abzweigbar und kanalisiert, z. B. über eine turbinengehäuseinterne Bohrung 27, wie aus Fig. 3 ersichtlich, in den Innenraum 13 des Wärmetauscher-Gehäuses 14 einspeisbar. Dieses Abgas ist dann, nach einer gewissen wärmeabgebenden Verweildauer, aus dem Wärmetauscher 12 an einer von der Einleitstelle 28 entfernten Stelle 29, z. B. über eine turbinengehäuseinterne Bohrung 30, wie aus Fig. 2 ersichtlich, wieder ausleitbar und in den Abgastrakt 31 ausgangs bzw. nach Abgasturbine 4 einleitbar. Die Verweildauer des Abgases im Wärmetauscher kann mittelbar, z. B. durch einstellbare Drosseln in den Bohrungen 27, 30 oder durch Abstimmung der Querschnitte dieser Bohrungen 27, 30 festgelegt bzw. eingestellt werden.

Im Fall des Beispiels gemäß Fig. 5 weist das Wärmetauscherrohr 18 eingangs einen ersten Anschluss 32, an den die Zuleitung 22 für das aufzuheizende Medium befestigt ist, und ausgangs einen zweiten Anschluss 33 auf, an dem die Abführleitung 23 für das aufgeheizte Medium angeschlossen ist.

Unabhängig von seiner unterschiedlichen Ausgestaltung ist der Wärmetauscher 12 mit seiner Zuleitung 22 und Abführleitung 23 in den Medium-Kreislauf 3 bzw. 3' bedarfsweise einsteuerbar. Der Bedarf für diese Einschaltung wird z. B. am Ort, wo das aufgeheizte Medium wirksam werden soll, durch einen oder mehrere Temperatursensoren erfasst. Die Ein- und Aussteuerung des Wärmetauschers 12 in den Medium-Kreislauf 3 erfolgt z. B. durch schaltbare Umschaltventile 35, 36, die ihre Schaltbefehle von einer elektronischen Regel- und Steuereinrichtung (nicht dargestellt) her erhalten und die über einen Leitungsabschnitt 37 miteinander verbunden sind, der im Fall der Nichteinbindung des Wärmetauschers 12 diesen dann im Medium-Kreislauf 3, 3' als Bypass überbrückt.

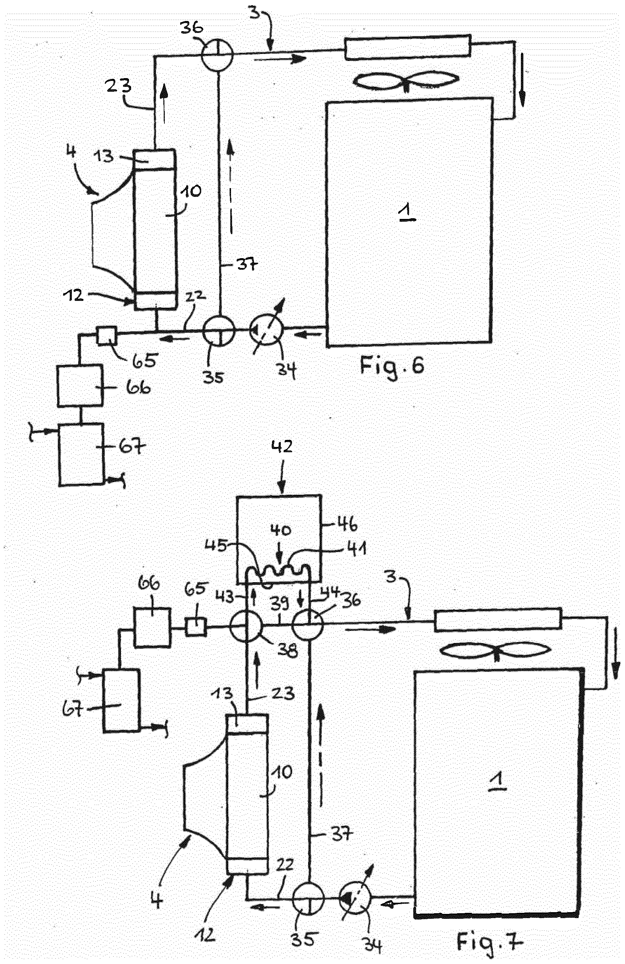

Nachfolgend ist unter Bezugnahme auf die Figuren 6 bis 10 auf verschiedene Medium-Kreisläufe 3, 3' sowie deren Ausgestaltung und Verwendung näher eingegangen.

Im Fall von Fig. 6 handelt es sich bei dem Medium-Kreislauf 3 um den Kühlkreislauf der Brennkraftmaschine 1 und bei dem darin befindlichen, mittels einer Pumpe 34 umgewälzten Medium um das flüssige Kühlmittel - Kühlwasser bzw. mit Frostschutzmittel gemischtes Kühlwasser - der Brennkraftmaschine 1. In diesen Kühlkreislauf 3 ist der erfindungsgemäße Wärmetauscher 12 bedarfsweise über die Umschaltventile 35, 36 einsteuerbar, dies z. B. immer dann, wenn eine rasche Erwärmung des Kühlmittels nach einem Kaltstart der Brennkraftmaschine 1 erforderlich ist. Diese Einschaltung des Wärmetauschers 12 in den Kühlkreislauf 3 erfolgt über eine temperaturgeführte Regelung/Steuerung mit entsprechender Einflussnahme auf die Schaltstellung der Umschaltventile 35, 36. Der Wärmetauscher 12 wird z. B. dann durch entsprechende Umschaltung der Umschaltventile 35, 36 wieder aus dem Kühlkreislauf herausgeschaltet, wenn das Kühlwasser hinreichend vorgewärmt ist.

Im Fall von Fig. 7 handelt es sich wie im Fall von Fig. 6 bei dem Medium-Kreislauf 3 ebenfalls um den Kühlkreislauf der Brennkraftmaschine 1 und bei dem darin mittels der Pumpe 34 umgewälzten Medium um Wasser bzw. mit Frostschutzmittel gemischtes Wasser. Zusätzlich ist hier ein drittes schaltbares Umschaltventil 38 vorgesehen, zu dem die Abführleitung 23 hinführt und das über einen Leitungsabschnitt 39 mit dem zweiten Umschaltventil 36 verbunden ist. Mit 40 ist ein Heizkreis bezeichnet, der aus einem Heizorgan 41 in bzw. an einem Wärmeabnehmer 42, einer vom Umschaltventil 38 abgehenden und mit dem Heizorgan 41 kommunizierenden Zuleitung 43 und einer vom Heizorgan 41 abgehenden Rückleitung 44 besteht, die zum Umschaltventil 36 hinführt. Dieser Heizkreis 40 dient zur Wärmeabgabe an den Wärmeabnehmer 42, bei dem es sich z. B. um einen Behälter handeln kann, in dem eine aufgenommene bzw. bevorratete Flüssigkeit zu erwärmen, warm zu halten, am Einfrieren zu hindern oder nach Einfrieren aufzutauen ist. Das Heizorgan 41 kann z. B. innerhalb des Wärmeabnehmers 42/Behälters knapp über dessen Boden 45 nach Art eines geraden oder gewendelten bzw. mäandernden Heizrohres oder durch ein in Vertiefungen des Bodens 45 oder der Wand 46 des Wärmeabnehmers 42/Behälters eingebettetes Heizrohr oder ein in das Material des Bodens 45 oder der Wand 46 des Wärmeabnehmers 42/Behälters integriertes Heizrohr gebildet sein. Dieser Heizkreis 40 ist bedarfsweise über die Umschaltventile 35, 36, 38 in Reihe zum Wärmetauscher 12 in den Medium-Kreislauf 3 - hier Kühlkreislauf der Brennkraftmaschine 1 - einschaltbar. Diese Aktivierung des Heizkreises 40 und Wärmetauschers 12 erfolgt temperaturgeführt, z. B. wenn mittels eines wärmeabnehmerseitigen oder -internen Sensors ein Heizbedarf festgestellt wird, durch eine Steuerung/Regelung mit entsprechender Einflussnahme auf die Schaltstellung der drei Umschaltventile 35, 36, 38. Wenn der Wärmetauscher 12 und der Heizkreislauf 40 in den Medium-Kreislauf 3 eingeschaltet sind, wird das Medium mittels der Pumpe 34 dem Wärmetauscher 12 zugeführt, dort aufgeheizt und dann dem Heizkreis 40 zugeführt, wo es wärmeabgebend Einfluss auf z. B. den Zustand der behälterinternen Flüssigkeit nimmt. Der Wärmetauscher 12 und der Heizkreis 40 werden dann durch entsprechende Umschaltung der Umschaltventile 35, 36, 38 wieder aus dem Medium-Kreislauf 3 herausgeschaltet, wenn vom z. B. behälterseitigen Temperatursensor ein Zustand der erwärmten Flüssigkeit gemeldet wird, der die Beheizung nicht mehr erfordert.

Anstelle in den brennkraftmaschinenseitigen Kühlkreislauf - wie vor anhand von Fig. 6 und 7 beschrieben -, kann der erfindungsgemäße Wärmetauscher 12 aber auch in einen autarken, von der Brennkraftmaschine 1 und deren Kühlkreislauf unabhängigen Medium-Kreislauf 3' eingeschaltet werden bzw. eingebunden sein. Bei dem in diesen Medium-Kreislauf 3' befindlichen Medium kann es sich beispielsweise um Wasser oder mit Frostschutzmittel gemischtes Wasser oder jede andere geeignete Flüssigkeit, z. B. auch eine niedrig-siedende Flüssigkeit wie ein Ammoniak-Wasser-Gemisch, handeln.

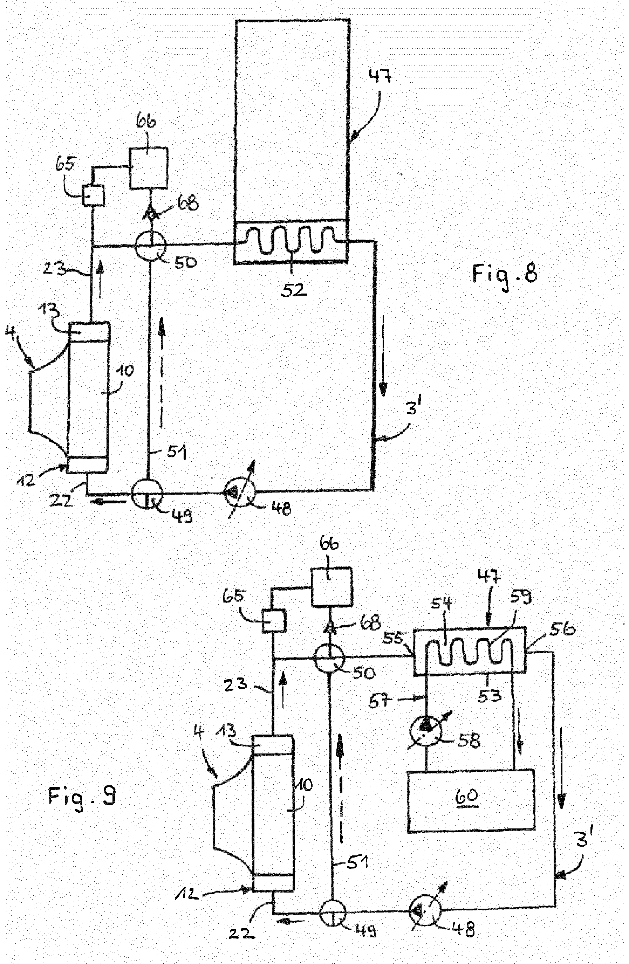

Beispiele solcher autarker Medium-Kreisläufe 3' sind in den Figuren 8 bis 10 dargestellt.

Jeder dieser Medium-Kreisläufe 3' führt durch oder über einen Wärmeabnehmer 47. Das im Medium-Kreislauf 3' eingeschlossene Medium wird mittels einer Pumpe 48 umgewälzt. Zwei Umschaltventile 49, 50, die durch einen Leitungsabschnitt 51 des Medium-Kreislaufs 3' miteinander verbunden sind, ermöglichen je nach Schaltstellung die Einschaltung des erfindungsgemäßen Wärmetauschers 12 in den Medium-Kreislauf 3' oder dessen Überbrückung über den dann als Bypass fungierenden Leitungsabschnitt 51. Im Fall von Fig. 8 ist als Wärmeabnehmer 47 ein eine Flüssigkeit beinhaltender bzw. bevorratender Behälter gezeigt, bei dem es sich ebenso wie bei jenem (42) gemäß Fig. 6 um einen solchen eines Fahrzeugs handeln kann, wie
- einen Vorratsbehälter für eine Harnstoffwasserlösung, die bei ca. -12°C einfrieren würde, oder
- einen Vorratsbehälter für eine Windschutzscheiben- und/oder Scheinwerfer- und/oder Außenspiegelreinigungsflüssigkeit, oder
- einen kühlwasserführenden Kühler, oder
- einen Kühlwasser aufnehmenden Ausgleichsbehälter, oder
- eine elektrische Speicher-Batterie, oder
- einen Heizkörper, oder
- einen Warmwasserbehälter, z. B. in Bordküchen von Omnibussen oder Wohnmobilen, oder
- einen Spülwasservorratsbehälter in Bordtoiletten von Omnibussen oder Wohnmobilen, oder
- einen zweiten Wärmetauscher, über den ein Sekundärmedium-Kreislauf führt.

Im bzw. am Wärmeabnehmer 47 gemäß Fig. 8 ist ein Heizrohr 52 vorgesehen, das in gleicher oder ähnlicher Weise wie das Heizrohr 41 von Fig. 7 ausgebildet, angeordnet oder wandintegriert ist. Die Aktivierung des Wärmetauschers 12 zum Zweck der Aufheizung des Mediums im Medium-Kreislauf 3' und einer Wärmeabgabe im Bereich des Wärmeabnehmers 47 erfolgt hier ähnlich wie im Beispiel von Fig. 7, also abhängig von einer mittels Sensor im bzw. am Wärmeabnehmer 47 erfassten Temperatur durch entsprechende Einflussnahme auf die Schaltstellung der beiden Umschaltventile 49, 50.

Im Fall des Beispiels gemäß Fig. 9 ist bei ansonstem gleichem Aufbau wie in Fig. 8 der Wärmeabnehmer 47 durch einen weiteren Wärmetauscher 53 gebildet, dessen von einem Gehäuse umfasster Innenraum 54 über einen Eingang 55 und Ausgang 56 in den Medium-Kreislauf 3' eingebunden und von darin befindlichem Medium durchströmbar ist. Durch den Wärmetauscher 53 ist ein Sekundärmedium-Kreislauf 57 hindurchgeführt, in dem ein mittels einer Pumpe 58 umgewälztes Sekundärmedium über ein im Innenraum 54 des Wärmetauschers 53 angeordnetes Wärmetauscherrohr oder -rohrbündel 59 leitbar ist, dem Wärme aus dem ersten Medium-Kreislauf 3' zuführbar ist. Dieses solchermaßen erwärmte Sekundärmedium wird im Sekundärmedium-Kreislauf 57 einem darin eingebundenen Wärmeabnehmer 60, wie einem Verbraucher oder Wärmespeicher oder flüssigkeitsbeinhaltenden Behälter, zugeführt. Im Prinzip könnte es sich bei dem Wärmeabnehmer 60 unter anderem auch um solche (42, 47) wie in Verbindung mit Fig. 7 und 8 genannte handeln.

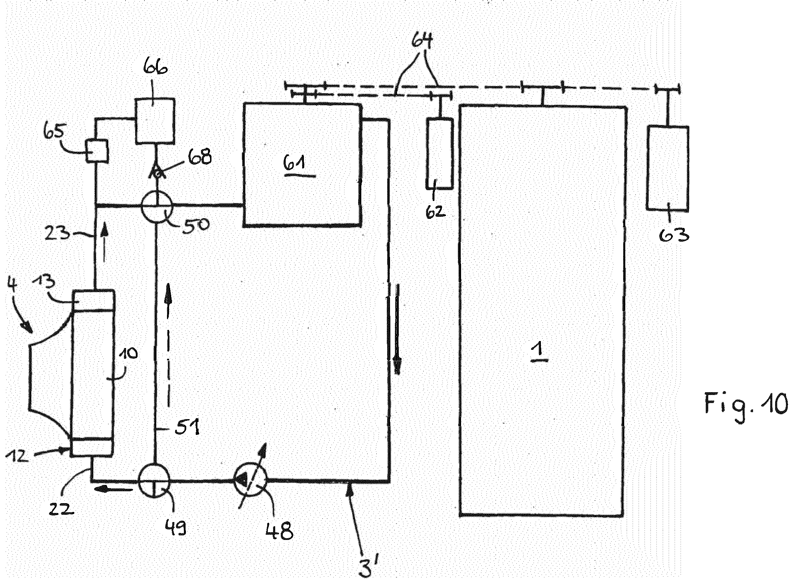

Anhand von Fig. 10 ist ein Anwendungsbeispiel beschrieben, bei dem als Medium eine niedrig-siedende Flüssigkeit zur Anwendung kommt, die in einem geschlossenen Medium-Kreislauf 3' aufgenommen ist und bei Durchströmen des erfindungsgemäßen Wärmetauschers 12 von ihrem normalerweise flüssigen in dampfförmigen Aggregatszustand überführbar ist. Der schaltungsmäßige Aufbau ist dabei ähnlich wie in Fig. 8. Bei dem Wärmeabnehmer 47 handelt es sich im Fall von Fig. 10 jedoch um eine Dampfturbine 61, der das im Wärmetauscher 12 in seinen dampfförmigen Aggregatzustand überführte Medium zuführbar und dort unter Entspannung und Abkühlung leistungsabgebend wirksam ist. Die Dampfturbine 61 ist antriebsmäßig mit der Kurbelwelle 1' der Brennkraftmaschine 1 und/oder Nebenaggregaten 62, 63 derselben, wie Lichtmaschine, Generator, Pumpen, Luftpresser etc., verbunden oder über eine oder mehrere schaltbare Kupplung(en) an- und abkuppelbar, wodurch die Dampfenergie in mechanische Energie umsetzbar ist. Der bzw. die betreffenden Antriebsstränge sind mit 64 bezeichnet.

In allen Anwendungsfällen ist dafür Sorge zu tragen, dass dann, wenn der Wärmetauscher 12 nach einer Phase der Aufheizung des Mediums durch Umschaltung der Umschaltventile 35, 36, 38; 49, 50 wieder aus dem Medium-Kreislauf herausgenommen und über die Bypassleitung 37, 51 überbrückt ist, sich das dann noch in der abgetrennten Schaltstrecke zwischen den Umschaltventilen 35, 36 (Fig. 6) bzw. 35, 38 (Fig. 7) bzw. 49, 50 (Fig. 8, 9, 10) befindliche, im Wärmetauscher 12 erhitzte Medium entspannen kann. Hierzu ist an geeigneter Stelle dieser Schaltstrecke ein Überdruckventil 65 angeschlossen, das mit einem Entspannungs- und Abkühlraum 66 für das abgeleitete Medium kommuniziert. Aus diesem kann das Medium dann z. B. einem Mediumausgleichs- oder -vorratsbehälter 67 (siehe Fig. 6, 7) oder über ein nur in Einspeiserichtung durchlässiges Rückschlagventil 68 (siehe Fig. 8, 9, 10) wieder in den Medium-Kreislauf 3, 3' eingespeist werden.

Außerdem ist in allen Anwendungsfällen eine vorzugsweise elektronische, rechnergestützt arbeitende Regel- und Steuereinrichtung vorgesehen, die per Programm und vorgegebener eingespeicherter Sollwerte anhand ihr zugeführter Istwerte, wie wärmeabnehmerseitige Temperaturwerte sowie Strömungs- und Druckwerte in den Medium-Kreisläufen 3, 3' 57, den Betrieb und die Drehzahlen der Pumpen 34, 48, 58 sowie die Schaltung/Umschaltung der Umschaltventile 35, 36, 38, 49, 50 für Aktivierung und Deaktivierung des Wärmetauschers 12 als Heizquelle steuert.

Generell ist außerdem, dass der Wärmetauscher 12 an der Abgasturbine 4 des Abgasturboladers in gewissem Maße auch als Kühlorgan fungieren kann, weil er das Turbinengehäuse außen zumindest teilweise abschirmt und so dessen nach außen wirkende Hitzeabstrahlung insbesondere in Verbindung mit dem durchströmenden Medium reduziert. Dadurch können äußere Wärmedämmungen oder Abschirmungen entweder ganz entfallen oder müssen nur reduziert bzw. vereinfacht realisiert werden.

## Patentansprüche

1. Fahrzeug oder stationäre Kraftanlage, mit einer mittels Abgasturbolader (2) aufgeladenen Brennkraftmaschine (1) als Antriebsquelle und mit Komponenten, die von einem in einem geschlossenen Kreislauf (3, 3') aufgenommenen Medium her mit Wärme versorgbar sind, **dadurch gekennzeichnet, dass** die Turbine (4) des Abgasturboladers (2) als Heizquelle herangezogen und/oder ausgebildet ist und hierzu außen am Turbinengehäuse (10) ein Wärmetauscher (12) angeordnet ist, der in den Medium-Kreislauf (3, 3') eingebunden oder einschaltbar ist und in dessen Innenraum (13) das direkt oder kanalisiert hindurchgeleitete Medium unter Ausnutzung wenigstens der thermischen Abstrahlungsenergie des heißen Turbinengehäuses (10) aufheizbar ist, wobei im Medium-Kreislauf (3, 3') eine Pumpe (34) für die Umwälzung des Mediums sorgt, und dass der Wärmetauscher (12) über eine Zuleitung (22) und Abführleitung (23) bedarfsweise durch schaltbare Umschaltventile (35, 36; 38) in den Medium-Kreislauf (3) ein- und wieder aussteuerbar ist, wobei das erste (35) und zweite Umschaltventil (36) über einen Leitungsabschnitt (37) miteinander verbunden sind, der im Fall der Nichteinbindung des Wärmetauschers (12) diesen dann im Medium-Kreislauf (3, 3') als Bypass überbrückt, und wobei der Wärmetauscher (12) in einen autarken, von der Brennkraftmaschine (1) und deren Kühlkreislauf unabhängigen Medium-Kreislauf (3') einschaltbar bzw. eingebunden ist, in dem eine weitere Pumpe (48) für die Umwälzung des Mediums sorgt und zwei durch einen Leitungsabschnitt (51) verbundene Umschaltventile (49, 50) vorgesehen sind, mit denen je nach Einstellung die Einschaltung des Wärmetauschers (12) in den Medium-Kreislauf (3') oder eine Überbrückung des Wärmetauschers (12) über den dann als Bypass fungierenden Leitungsabschnitt (51) steuerbar ist.

2. Fahrzeug oder stationäre Kraftanlage nach Anspruch 1, **dadurch gekennzeichnet, dass** über den Medium-Kreislauf (3, 3') sowie den darin eingeschalteten Heizkreis (40) eine im Wärmeabnehmer (42, 47), insbesondere Behälter, eingeschlossene bzw. bevorratete Flüssigkeit abhängig von einer temperaturgeführten Regelung/Steuerung erwärmbar bzw. aufheizbar oder am Einfrieren hinderbar oder nach Einfrieren nach einem Kaltstart der Brennkraftmaschine auftaubar ist.

3. Fahrzeug oder stationäre Kraftanlage nach einem der vorhergehenden Ansprüche, **dadurch gekennzeichnet, dass** es sich bei dem Wärmeabnehmer (42, 47) um einen Behälter, insbesondere solchen eines Fahrzeugs, handelt, wie
- einen Vorratsbehälter für eine Harnstoffwasserlösung, oder
- einen Vorratsbehälter für eine Windschutzscheiben- und/oder Scheinwerfer- und/ oder Außenspiegelreinigungsflüssigkeit, oder
- einen kühlwasserführenden Kühler, oder
- einen Kühlwasser aufnehmenden Ausgleichsbehälter, oder
- eine elektrische Speicher-Batterie, oder
- einen Heizkörper, oder
- einen Warmwasserbehälter, z. B. in Bordküchen von Omnibussen oder Wohnmobilen, oder
- einen Spülwasservorratsbehälter, z. B. in Bordtoiletten von Omnibussen oder Wohnmobilen.

4. Fahrzeug oder stationäre Kraftanlage nach Anspruch 1, **dadurch gekennzeichnet, dass** der Medium-Kreislauf (3, 3') als Wärmeabnehmer (47) einen Wärmetauscher aufweist, über dessen Innenraum (54) ein Sekundärmedium-Kreislauf (57) führt, in dem mittels einer Pumpe (58) ein Sekundärmedium umwälzbar ist, das durch ein im Innenraum (54) des Wärmetauschers angeordnetes Wärmetauscherrohr oder -rohrbündel (59) leitbar ist, dem Wärme aus dem ersten Medium-Kreislauf (3, 3') zuführbar ist und das die aufgenommene Wärme an das Sekundärmedium zu dessen Erwärmung abgibt, welches erwärmte Sekundärmedium einem in den Sekundärmediumkreislauf (57) eingeschalteten Wärmeabnehmer (60) wie Verbraucher oder Wärmespeicher zuführbar ist.

5. Fahrzeug oder stationäre Kraftanlage nach einem der vorhergehenden Ansprüche, **dadurch gekennzeichnet, dass** an der über den Wärmetauscher (12) führenden und sich zwischen den Umschaltventilen (35, 36 bzw. 35, 38 bzw. 49, 50) erstreckenden Schaltstrecke an geeigneter Stelle ein Überdruckventil (65) angeschlossen ist, über das bei abgesperrter, nicht in den Medium-Kreislauf (3, 3') eingebundener Schaltstrecke das sich noch darin befindliche erhitzte Medium in einen nachfolgenden Entspannungs- und Abkühlraum (66) hinein entspannen kann.

6. Fahrzeug oder stationäre Kraftanlage nach einem der vorhergehenden Ansprüche, **dadurch gekennzeichnet, dass** eine elektronische, rechnergestützt arbeitende Regel-und Steuereinrichtung vorgesehen ist, die per Programm und vorgegebener eingespeicherter Sollwerte anhand ihr zugeführter Istwerte, wie wärmeabnehmerseitig erfasste Temperaturwerte sowie im Medium-Kreislauf (3, 3', 57) erfasste Strömungs- und Druckwerte den Betrieb und die Drehzahlen der Pumpen (34, 48, 58) sowie die Schaltung/Umschaltung der Umschaltventile (35, 36, 38, 49, 50) für Aktivierung und Deaktivierung des Wärmetauschers (12) als Heizquelle steuert.
